# EUROPEAN PATENT APPLICATION

(11) **EP 1 578 130 A1**
(43) Date of publication of application: **21.09.2005**
(21) Application number: 04425196.5
(22) Date of filing: 19.03.2004
(51) Int. Cl.: H04N 7/18, G07C 9/00, G08B 23/00, G08B 21/00, G06K 9/00, G08B 25/00

(54) **Automated video editing system and method**

(71) Applicant: Eximia S.r.l., 20154 Milano (IT)
(72) Inventor: Locatelli, Marco, 20154 Milano (IT); Alberoni, Paolo, 20123 Milano (IT)
(74) Representative: Faggioni, Carlo Maria

(57) **Abstract**

A video editing system and method is disclosed, wherein a plurality of video clips is acquired and stored, together with their respective time codes and the identification code of respective video-cameras, and a signal of the presence of individuals/objects equipped with RFID tags is also acquired and stored, through detection antennas associated to each of said video-cameras, wherein a video sequence concerning said individuals/objects is further reconstructed identifying and editing a series of video excerpts on the basis of an association between the video-camera ID and the video time codes to the parameters of said presence signal of the individual/object.

## Description

### FIELD OF THE INVENTION

The present invention relates to a system and a method for the automatic control of video recordings and video editing; it relates in particular to such a system employed in crowded places, where quick and automatic editing of the video sequences concerning a specific individual or groups of individuals, for example at an amusement park, is required.

### PRIOR ART

As known, closed-circuit video-recording systems are intended to pick up images of an area within which a plurality of individuals moves freely. To cover a large area, a series of video-cameras are normally provided, each picking up images of a respective specific area. The signals originating from the various video-cameras are made to converge, through a suitable wiring and signal collection system, towards an operation headquarters room.

In some cases, the operation headquarters are manned by operators monitoring the images displayed in real time onto a series of screens (in an equal or smaller number than the number of video-cameras) : such is the case of a standard video-surveillance system of a building or museum.

In other cases the images are simply recorded or stored onto suitable media in the operations room, to be viewed at a later stage if needed or upon request. This is the typical operational way implemented, for example in amusement parks: as a matter of fact, in this case an individual or a group of individuals walking in front of a video-camera (for example at the peak point of a roller-coaster loop) are filmed and the video or the digital photographs are saved and stored onto a (paper, electronic, digital or analogical) medium only upon request of that individual or group of individuals.

In any case, specific video-recording sequences or video clips, concerning an individual or group of individuals, are identifiable and easily retrieved only if viewed in real time (such as in the case of closed-circuit video-surveillance TV) or immediately after individuals have left (such as in the case of customised video-recordings at amusement parks). In all other cases, tracking the video sequences concerning a specific individual is a very tricky operation and requires a long processing and editing time, which process must be carried out manually by an operator who examines a long video recording and tracks and edits the sequences of specific interest. Besides, if the recordings are carried out by multiple video-cameras, the task is even more time-consuming.

Consequently, according to the prior art these operations cannot be made automatic, although there are contexts in which that is desirable. For example, in all those cases in which it is necessary to retrace later, in a short time, the path walked by an individual within an area filmed by multiple video-cameras, for example when a lost child must be located in a department store. Or in those cases when one wants to automate the editing of a series of video sequences relating to a specific individual, to later save them on a medium to be handed out to the same individual at the end of a given event, such as at the exit of an amusement park.

The object of the present invention is hence to provide a system and a method for the control of video recordings and for the automatic editing thereof according to the individual or the group of individuals filmed.

Such object is achieved by means of a system and method as described in their essential features in the attached main claims.

Other inventive aspects of the system and method are described in the dependent claims.

### BRIEF DESCRIPTION OF THE DRAWINGS

Further features and advantages of the system and method according to the invention will in any case be clearer from the following detailed description of a preferred embodiment thereof, given by way of example and illustrated in the accompanying drawings, wherein:
fig. 1 is a diagram representing the recording and control components according to the invention;
fig. 2 is a diagram representing the video editing and delivery components according to the invention; and
fig. 3 is a diagrammatic representation of a series of exemplary data processed by the system according to the invention.

### DESCRIPTION OF A PREFERRED EMBODIMENT

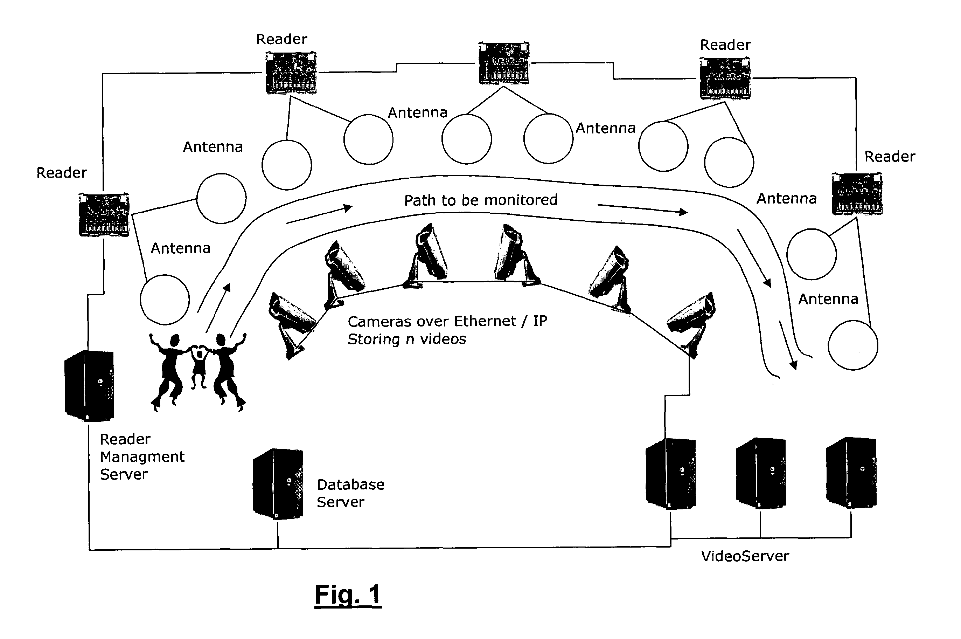

As can be seen in fig. 1, a video recording system of a path to be monitored includes, in a manner known per se, a plurality of suitably located digital video-cameras, so as to offer a video covering as complete as possible along the entire path of interest. The digital video-cameras are linked to an Ethernet/IP network, through which the digital video clips (so-called streaming videos) can be transferred to one or more VideoServers and stored there.

The digital video-cameras can record the framed field in a continuous mode or they can be controlled in order to take pictures only when desired, according to an operation mode which will be illustrated later on.

According to the invention, along the path to be monitored a series of RFID tag detector antennas is also provided. In this context, the concept and operation mode of the RFID tags will not be expanded on further, since they are devices known to an expert in the field. To understand better their operation, reference can be made, for example, to the European application no. 03425648.7 filed in the name of the same Applicant.

The reading antennas are linked to respective transducers or "readers", connected to each other within a network and with a reader management server.

Since the position of the antennas and of the digital video-cameras is fixed, it is possible to establish a univocal relationship between the antennas and the respective video-cameras. In other words, to each video-camera or video-camera recording area can be associated an ID code of a specific antenna for the detection of RFID tags.

The VideoServers and the reader management server are then interfaced with a database server whose usefulness will be illustrated later on.

Finally, a series of RFID tags mounted on suitable supports (for example wristbands) and fixed to the individual or the object whose position one wants to monitor, are part of the system according to the invention.

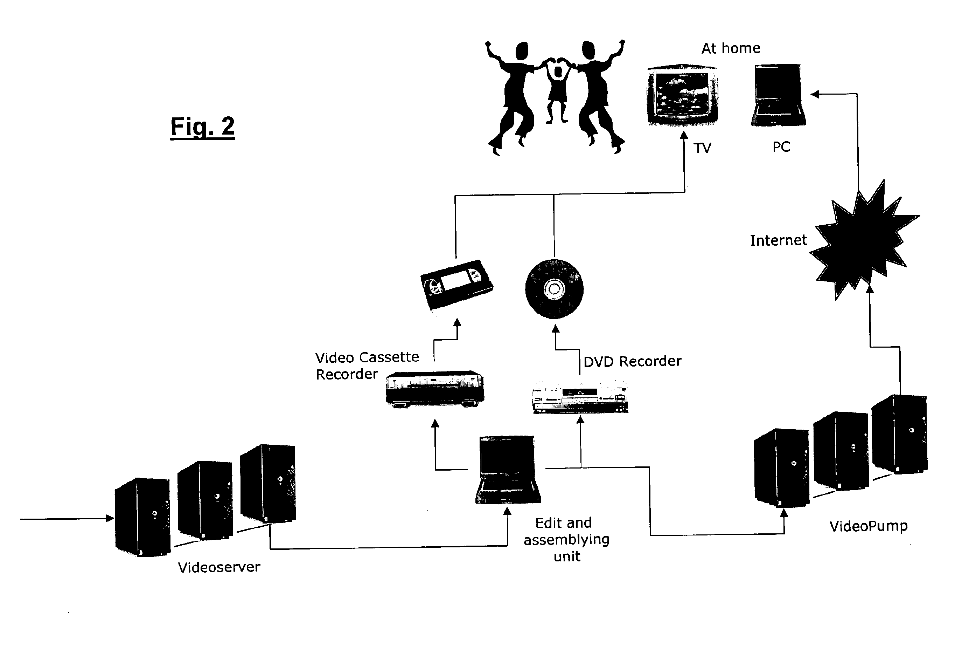

In a central position, for example in an operations room, a video processing unit is arranged, comprising a video editing station and recording/burning devices, such as video cassette recorder, DVD or CD burner (Fig. 2).

During functioning, the system according to the invention allows to automatically acquire a plurality of clips and to edit them in a sequence in the following manner.

As an individual or an object moves along his/its path, his/its presence in the areas covered by specific video-cameras is detected, according to the reading of the identity and position of the respective RFID tag. In particular, each reading antenna continuously detects the presence of the RFID tags which enter, remain in and exit its range: these data, linked to the identity of the antenna, to the identity of the individual RFID tags and to the associated time coordinates, are stored on a database server.

Preferably, on the database server an "event" table is defined containing a series of records consisting of at least the following fields: ID_Tag_Rfid, N_Antenna, Date_Time_event, Duration_event, which represent, respectively, the identification number of the RFID tag, the ID of the antenna which has detected the presence of that RFID tag, the time at which that event has occurred and its duration. In essence, each record stores the parameters necessary to identify the individual events represented by the complete detection of an RFID tag within the area pertaining to a specific antenna, from the moment in which the antenna begins to detect the tag up until the moment in which it loses trace thereof.

Since the area pertaining to each antenna is set so as to coincide with at least part of the recording area of a video-camera associated thereto, it can be inferred that each event can easily be associated to a portion of video-recording or videoclip of a specific video-camera which frames a specific moving individual/object.

In the VideoServers, in fact, digital video-camera clips are stored together with a respective time code which identifies the recording time of each individual video frame. Hence, it is sufficient to time-synchronise each clip with the reference timeline of the events captured by the receiving antennas to be able to reconstruct exactly the videoclip pertaining to a certain individual in a specific recording area.

Thanks to the system of the invention, it is therefore possible to have available, at any time, a database concerning the events associated to a certain individual/object and a database of digital video clips, obtained from the various video-cameras located along a path or in a predefined area, which can be reciprocally associated according to their time location.

The sum of all the events (and hence of all the video excerpts or videoclips) concerning a given RFID tag makes up the route (and therefore the entire recording) covered by the individual/object within the area monitored by the system according to the invention. Hence, summing up the various videoclips traced in the video server in correspondence of the individual events, on the basis of the established time synchronisation, a complete video clip is obtained concerning a single RFID tag.

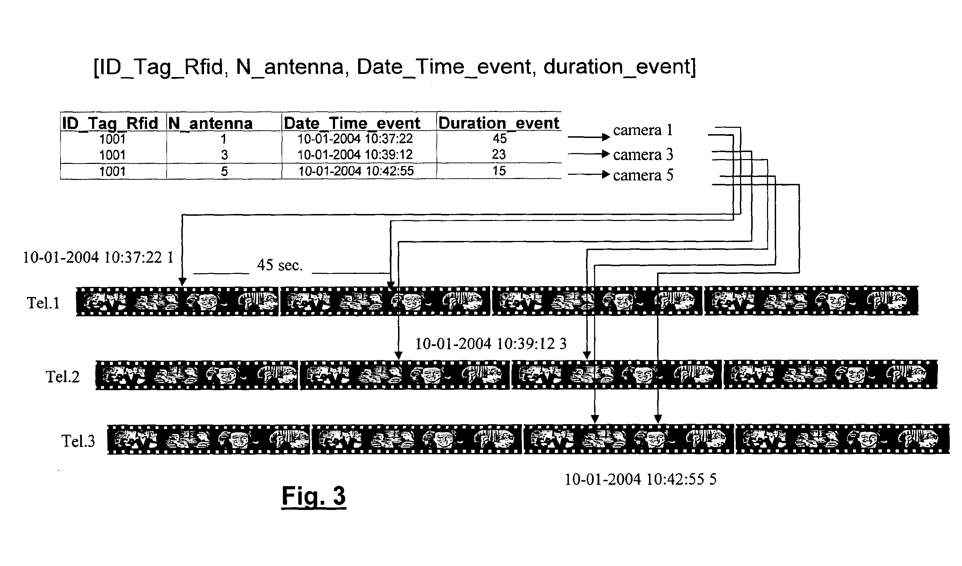

By way of example, reference can be made to fig. 3, where a complete video clip is reconstructed made up of three different events, recorded by three distinct video-cameras, concerning the same individual (ID of the RFID tag = 1001).

In the database server are stored the three records which can be seen in the top section of the figure. In the video server are stored the three video tracks, corresponding to the entire recording carried out by three video-cameras, with the respective time codes and video-camera IDs (tel. 1, tel. 2, tel. 3).

In the editing station, according to the parameters stored in the first record, the video excerpt tel. 1 beginning at point 10:37:22 of the time code and having a duration of 45 seconds is identified, then the video excerpt tel. 2 beginning at point 10:39:12 of the time code and having a duration of 23 seconds, and finally the video excerpt tel. 3 beginning at point 10:42:55 of the time code and having a duration of 15 seconds.

These three video excerpts are successively edited in sequences and stored.

As can be easily guessed, with the arrangement of the invention, the reconstruction process of a complete recording concerning a specific individual can be achieved quickly and in an automatic manner.

As a matter of fact, during production, with known-type IT devices (outlined in fig. 2 as an editing station), from the event database (database server) all or part of the event records are selected which refer to a certain individual/object according to the identification number of their respective RFID tag. Using the antenna reference (N_Antenna), the video-camera(s) associated to the individual events is/are identified. Through the time markers (Date_Time_event, Duration_event) found in the records, the video excerpts or videoclips pertaining to the individual/object framed in the reading range of the antenna are selected from the videos of each video-camera stored in the video-server. The selected excerpts are then edited in sequence according to their time code, into new single digital video clips. During this final video editing process other effects of a various nature can be added, such as video transitions, background music and captions, according to predefined style rules.

Finally, the new digital video produced can be dubbed onto a physical distribution medium, for example a DVD, video CD, SVCD, videotape or other, or it can be delivered by videopump (a server capable of providing a high-performance stream video on a network) on a local network or on the Internet and accessed by users freely or via an authentication system.

The video production system and method according to the invention are very well-suited to a series of innovative applications.

A first advantageous application is within a theme park. Any visitor interested in receiving a video-recording of his visit, or each visitor regardless thereof, is equipped with a personal RFID badge at the entrance. Besides, a series of individuals belonging to the same family or homogeneous group of individuals, is associated to a common group code in a database. It is thereby possible to identify not only a single individual, but an entire group of individuals, whose recordings can be stored on a single medium.

The video-cameras positioned at the sites of interest continuously record the framed scenes, which are stored with the relevant time code onto hard disks or other rapid access storage means on a PC server.

The presence of specific individuals is detected by their RFID tag and the corresponding event is stored in a database server to later perform automatic editing.

For example, visitors board a roller-coaster; when people pass through a passageway where a detection antenna is installed, the time the roller-coaster starts is detected by reading the RFID badges and this piece of data is stored in the database in the manner illustrated above. The other recording sites along the route of the roller-coaster, where other video-cameras with microphone are installed, are predetermined and the recordings can hence in any case be tracked in time without necessarily having available other detection antennas for all the video-cameras. For example, it is known a priori that the peak of the climb is at x seconds from the starting passageway, maximum acceleration is achieved after y seconds from the start, and so on. Similarly, the duration of each recording along the route of the roller-coaster has a preset duration. The same process is repeated for the various attractions, at the restaurant, in the play area, and so on.

At the end of the visit, a passageway detects that the individuals of interest are leaving the park and are walking towards the exit. A triggering signal is consequently generated and a video-processing software, automatically cuts out the sequences of the group/family or of the individual visitor and arranges them into a file which can be transferred onto a physical medium (DVD or videotape) and sent home or handed out directly to the customer in a very short time (assessable at approximately 10-15 minutes). The file can also be stored onto a server connected to the network (for example to the Internet) for remote on-line access, for example controlled by an authentication system which allows only the individuals in question to see its contents.

The system according to the invention can also be applied in the monitoring of individuals in hazardous areas at work (building sites, quarries, etc.), in the search of children who got lost in enclosed areas (play areas, superstores, etc.), in the monitoring of consumers in superstores (for example attaching the RFID tag to the trolley or integrating it in a "fidelity card") for marketing purposes, and for the surveillance of the route followed by people within facilities such as golf courses, natural parks, museums, prisons, and others.

It is understood, however, that the invention is not limited to the specific embodiments illustrated above, which represent only non-limiting examples of the scope of the invention, but that a number of changes may be made, all within the reach of an expert in the field, without going beyond the scope of the invention.

For example, although reference has always been made to video-cameras recording in continuous mode, a further triggering device associated to each video-camera can be provided, which triggers recording only when the pertaining antenna detects the presence of an RFID tag. This mode can be used in special, little crowded conditions, and allows savings in terms of the camera workload and in terms of storage space for video acquisition.

## Claims

1. Video editing system comprising a series of video-cameras located in a preset area, connected to a control station, apt to pick up pictures of moving individuals/objects in said area, **characterised in that**
transponders with a remote-detectable univocal identification applied to said individuals/objects to be filmed are further provided,
each video-camera is associated to at least one reading antenna of said transponders capable of acquiring parameters concerning the event of said transponder passing near the antenna,
a video server is provided, wherein the pictures taken by said video-cameras can be stored together with their respective time codes, and a database server, wherein said event parameters can be stored,
said control station comprising means to identify video excerpts pertaining to said individuals/objects according to the events stored in said database server.

2. System as claimed in claim 1), wherein said event parameters comprise the ID of the pertaining video-camera, the ID of the detected transponder and the time position in which said event took place.

3. System as claimed in claim 1) or 2), wherein said station also comprises editing means which sequentially edit said video excerpts identified by the control station.

4. System as claimed in any one of the preceding claims, further comprising video delivery means.

5. System as claimed in claim 4), wherein said video delivery means comprise a recording station which uses physical media.

6. System as claimed in claim 4), wherein said video delivery means comprise a delivery station to distribute videos to a video access network.

7. System as claimed in any one of the preceding claims, wherein said transponders are RFID tags.

8. Video editing method **characterised in that** it comprises the steps of:
providing a moving individual/object with a transponder with a univocal identification number which can be remotely identified;
acquiring and storing video clips, together with the respective time codes and with the identification code of video-cameras belonging to a corresponding plurality of video-cameras framing pertaining areas;
associating said video-cameras, respectively, to detection antennas of said transponders;
acquiring and storing a signal of the presence of said transponders, through said detection antennas associated to each of said video-cameras, comprising at least transponder identity parameters, identification parameters of the video-camera associated to said antenna and time references of the time when said presence of the transponder was detected;
identifying and sequentially editing excerpts of said acquired and stored video clips belonging to an individual transponder, on the basis of an association between the video-camera identification code and the video time code to the parameters of said transponder presence signal.

9. Method as claimed in claim 8), further comprising the step of recording onto a physical medium said sequence of excerpts.

10. Method as claimed in claims 8) or 9), further comprising the step of associating a plurality of transponders belonging to a homogeneous group of individuals/objects to a group code and of carrying out said identification and editing steps for a series of video excerpts belonging to a plurality of transponders associated to the same group code.

11. Method as claimed in claims 8), 9) or 10), wherein said transponders are RFID tags.

12. Monitoring method of enclosed areas comprising the step of verification of video clips concerning one or more specific individuals, **characterised in that** it comprises to verify video assembly edited by way of the system and method according to any one of the preceding claims.
